# EUROPÄISCHE PATENTANMELDUNG

(11) **EP 4 797 176 A1**
(43) Veröffentlichungstag der Anmeldung: **26.08.2026**
(21) Anmeldenummer: 26157174.9
(22) Anmeldetag: 09.02.2026
(51) Int. Cl.: G06Q 10/08, H04L 67/10, H04L 67/12, H04W 4/029

(54) **ORTUNGSSYSTEM**

(30) Priorität: 20.02.2025 DE 102025106365
(71) Anmelder: AS Strömungstechnik GmbH, 73760 Ostfildern (DE)
(72) Erfinder: Fischer, Nico, 70794 Filderstadt (DE); Szeteli, Andreas, 70794 Filderstadt (DE)
(74) Vertreter: Ruckh, Rainer Gerhard

(57) **Zusammenfassung**

Die Erfindung betrifft ein Ortungssystem (8) für Behälter (3), wobei die Behälter (3) jeweils eine Behälteröffnung (5) zur Zufuhr oder Entnahme von Lagergut aufweisen. Slave-Behälter (3b) bildende Behälter (3) und Master-Behälter (3a) bildende Behälter (3) sind vorhanden, wobei nur die Master-Behälter (3a) bildenden Behälter (3) jeweils eine Ortungseinheit aufweisen, mittels derer als Ortungsinformation des Standorts dieses Behälters (3) bestimmt wird. Nur die Master-Behälter (3a) kommunizieren über eine Internet-Verbindung (10) mit einem cloudbasierten Rechnersystem (11). Die Behälter (3) weisen jeweils ein Datenübertragungsmodul (15) auf, wobei ein Datenübertragungsmodul (15) eines Slave-Behälters (3b) Sendesignale (16) an ein Datenübertragungsmodul (15) eines Master-Behälters (3a) sendet, falls sich das Datenübertragungsmodul (15) des Master-Behälters (3a) innerhalb einer Reichweite des Sendesignale (16) sendenden Datenübertragungsmoduls (15) des Slave-Behälters (3b) befindet. Das Datenübertragungsmodul (15) des Slave-Behälters (3b) sendet mit den Sendesignalen (16) Behälterinformationen dieses Slave-Behälters (3b) an das Datenübertragungsmodul (15) des Master-Behälters (3a). Die Behälterinformationen des Slave-Behälters (3b) werden vom Master-Behälter (3a) mit dessen Ortungsinformation über die Internet-Verbindung (10) an das cloudbasierte Rechnersystem (11) gesendet. Die Erfindung betrifft auch ein entsprechendes Verfahren.

## Beschreibung

Die Erfindung betrifft ein Ortungssystem und ein Verfahren zur Ortung von Behältern.

Derartige Behälter dienen generell zur Lagerung von Lagergut, insbesondere von Flüssigkeiten. Generell weist der Behälter eine Behälteröffnung auf, über welche das Lagergut aus dem Behälter entnommen bzw. diesem zugeführt werden kann.

Insbesondere können die Behälter Bestandteil eines Entnahmesystems sein.

Ein derartiges Entnahmesystem ist aus der EP 0 977 702 B1 bekannt. Dieses Entnahmesystem dient zum Befüllen und Entleeren von Behältern, insbesondere von Fässern, die mit flüssigen Chemikalien befüllt sind. Die Behälter weisen jeweils ein Tauchrohr auf, über welches im Behälter gelagerte Flüssigkeiten entnommen werden können und über welchen Flüssigkeiten dem Behälter zugeführt werden können. Das Entnahmesystem weist einen Entnahmekopf auf, der am Tauchrohr des jeweiligen Behälters angeschlossen wird.

Über den Entnahmekopf erfolgt dann eine Entnahme von Flüssigkeit aus dem Behälter oder gegebenenfalls auch eine Zufuhr von Flüssigkeit. Hierzu wird über den Entnahmekopf eine Pumpe angeschlossen, um die Entnahme oder Zufuhr von Flüssigkeit vorzunehmen.

Ist die Entnahme oder Zufuhr von Flüssigkeit abgeschlossen, wird die Behälteröffnung des jeweiligen Behälters mit einem Verschlussmittel verschlossen. Damit steht der Behälter für einen Transport bereit. Der Behälter kann dann beispielsweise zu einem Einsatzort, wo die Flüssigkeit zur Durchführung von Arbeitsvorgängen benötigt wird, oder zu einem Lagerort transportiert werden.

Eine wesentliche Aufgabe hierbei besteht in einer effektiven Objektverfolgung, d.h. Behälter sollen während ihres Transports fortlaufend lokalisiert werden können, um Transportvorgänge zu kontrollieren, Fehlleitungen von Behältern rechtzeitig erfassen und korrigieren zu können und auch um verlorengegangene Behälter wieder auffinden zu können.

Prinzipiell kann diese Objektverfolgung mittels GPS-Systemen erfolgen. Derartige GPS-Systeme sind jedoch unerwünscht aufwändig. In den Behältern müssen GPS-Tracker mit SIM-Karten eingebaut werden. Dies bedingt einen unerwünscht hohen Kostenaufwand. Zudem ist der Strombedarf derartiger Einheiten unerwünscht hoch.

Der Erfindung liegt die Aufgabe zugrunde ein einfaches und effizientes Ortungssystem für Behälter eines Entnahmesystems bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Ortungssystem für Behälter, wobei die Behälter jeweils eine Behälteröffnung zur Zufuhr oder Entnahme von Lagergut aufweisen. Slave-Behälter bildende Behälter und Master-Behälter bildende Behälter sind vorhanden, wobei nur die Master-Behälter bildenden Behälter jeweils eine Ortungseinheit aufweisen, mittels derer als Ortungsinformation des Standorts dieses Behälters bestimmt wird. Nur die Master-Behälter kommunizieren über eine Internet-Verbindung mit einem cloudbasierten Rechnersystem. Die Behälter weisen jeweils ein Datenübertragungsmodul auf, wobei ein Datenübertragungsmodul eines Slave-Behälters Sendesignale an ein Datenübertragungsmodul eines Master-Behälters sendet, falls sich das Datenübertragungsmodul des Master-Behälters innerhalb einer Reichweite des Sendesignale sendenden Datenübertragungsmodule des Slave-Behälters befindet. Das Datenübertragungsmodul des Slave-Behälters sendet mit den Sendesignalen Behälterinformationen dieses Slave-Behälters an das Datenübertragungsmodul des Master-Behälters. Die Behälterinformationen des Slave-Behälters werden vom Master-Behälter mit dessen Ortungsinformation über die Internet-Verbindung an das cloudbasierte Rechnersystem gesendet.

Die Internetverbindung kann eine WLAN-Verbindung oder eine Mobilfunk-Verbindung wie z.B. eine LTE-Verbindung oder eine 2G-, 3G-, 5G-, 6G-Mobilfunkstandard-Verbindung sein.

Die Erfindung betrifft auch ein entsprechendes Verfahren.

Der Grundgedanke der Erfindung besteht darin, die Behälter einer Behälteranordnung insbesondere hinsichtlich ihrer Kommunikationsmittel unterschiedlich auszubilden.

Dabei ist eine geringe Anzahl der Behälter als Master-Behälter ausgebildet, während der größte Teil der Behälter als Slave-Behälter ausgebildet ist.

Dabei weisen nur die Master-Behälter eine Ortungseinheit wie z.B. ein GPS-Modul, d.h. einen GPS-Tracker auf, so dass nur die Master-Behälter als Ortungsinformation ihren Standort bestimmen können.

Weiterhin können nur die Master-Behälter über eine Internet-Verbindung mit einem cloudbasierten Rechnersystem kommunizieren.

Demgegenüber ist in allen Behältern jeweils ein Datenübertragungsmodul vorhanden, wobei jeweils zwei Datenübertragungsmodule in jeweils einem Behälter eine Datenübertragungsstrecke begrenzter Reichweite bilden, d.h. wenn zwei Behälter in einem Abstand kleiner als die Reichweite der von einem Datenübertragungsmodul emittierten Sendesignale sind, können diese vom anderen Datenübertragungsmodul empfangen werden.

Das Funktionsprinzip des erfindungsgemäßen Ortungssystems ist derart, dass das Datenübertragungsmodul eines Slave-Behälters durch Aussenden seiner Sendesignale Behälterinformationen an das Datenübertragungsmodul eines Master-Behälters sendet, wenn sich dieser innerhalb der Reichweite der Sendesignale befindet. Mit den Sendesignalen sendet der Slave-Behälter eine Behälterinformation an den Master-Behälter, der diese Behälterinformation zusammen mit den im Master-Behälter vorliegenden Ortungsinformation über die Internet-Verbindung an das cloudbasierte Rechnersystem sendet.

Diese Behälterinformationen werden im cloudbasierten Rechnersystem gespeichert und können dort ausgewertet werden.

Wesentlich hierbei ist, dass aufgrund der begrenzten Reichweite der Datenübertragungsstrecke zwischen Slave-Behälter und Master-Behälter die Ortungsinformationen des Master-Behälters für den die Behälterinformationen sendenden Slave-Behälter übernommen werden können, um die Position des Slave-Behälters hinreichend genau zu bestimmen.

Auf diese Weise können Slave-Behälter durch die Kommunikation mit einem Master-Behälter hinreichend genau geortet werden, ohne dass diese selbst Ortungseinheiten wie GPS-Module aufweisen müssen.

Generell werden Behälteranordnungen mit einer großen Anzahl von Behältern zusammen transportiert, d.h. die Behälter befinden sich in kleinen Abständen, d.h. Abständen kleiner als die Reichweite der Sendesignale der Datenübertragungsmodule zueinander.

Damit reicht in der Behälteranordnung eine kleine Anzahl von Master-Behältern aus, um über diese eine große Anzahl von Slave-Behältern orten zu können. Im Grenzfall kann sogar ein Master-Behälter hierzu ausreichen.

Da nur eine kleine Anzahl von Master-Behältern notwendig ist, kann die Anzahl von aufwändigen Ortungseinheiten, insbesondere GPS-Modulen, gering gehalten werden, da nur die Master-Behälter die Ortungseinheiten aufweisen, nicht aber die Slave-Behälter, die nur Datenübertragungsmodule aufweisen, die erheblich kostengünstiger sind als die Ortungseinheiten.

Dadurch wird bei dem erfindungsgemäßen Ortungssystem gegenüber Sensorsystemen, bei denen alle Behälter eine Ortungseinheit aufweisen, ein erheblicher Einsparungseffekt erzielt.

Die Behälter und deren Behälterinformationen sind eindeutig identifizierbar.

Vorteilhaft umfassen hierzu die Behälterinformationen eine den jeweiligen Behältern eindeutig kennzeichnende Kennung.

Weiter vorteilhaft können die Behälterinformationen Sensorinformationen eines Sensors in oder am jeweiligen Behälter umfassen.

Mit dem oder den Sensoren können insbesondere Umgebungseinflüsse, die auf den jeweiligen Behälter einwirken, erfasst werden.

Insbesondere ist der Sensor ein Temperatursensor, mittels dessen die Temperatur innerhalb des Behälters erfasst wird.

Werden in den Behältern Flüssigkeiten gelagert, kann mit dem Temperatursensor die Temperatur einer im Behälter vorhandenen Gasphase gemessen werden.

Damit können Gefahrensituationen frühzeitig erkannt werden.

Optional können die Behälterinformationen den jeweiligen Behälter oder dessen Inhalt kennzeichnende Kenngrößen umfassen.

Behälterinformationen können die Artikel-, Serien- oder Bestellnummer eines Behälters sein.

Weiterhin kann mittels der Behälterinformation das im Behälter vorhandene Lagergut identifizierbar sein.

Vorteilhaft werden in den Behältern Lagergut in Form von Flüssigkeiten gelagert.

Derartige Flüssigkeiten können insbesondere von Chemikalien gebildet sein, die zur Durchführung von Arbeitsprozessen, insbesondere in der Halbleiterindustrie, benötigt werden.

Behälterinformationen können dann die Spezifikation des im Behälter gelagerten Lagerguts, insbesondere Flüssigkeiten, enthalten.

Alternativ können die Kenngrößen mit der Kennung des jeweiligen Behälters auch im cloudbasierten Rechnersystem abgespeichert sein.

Die Funktionsweise des erfindungsgemäßen Ortungssystems ist derart, dass von einem Master-Behälter dessen eigene Behälterinformationen sowie alle von Slave-Behältern eingelesen Behälterinformationen an das cloudbasierte Rechnersystem gesendet werden.

Damit wird im cloudbasierten Rechnersystem anhand der Ortungsinformation eine zeitabhängige Ortung der Behälter durchgeführt.

Die Ortungsinformationen werden im cloudbasierten Rechnersystem zusammen mit den Behälterinformationen für die einzelnen Behälter gespeichert und ausgewertet, wobei diese durch die Kennungen eindeutig den Behältern zugeordnet sind. Damit können im cloudbasierten Rechnersystem für unterschiedliche Behälter Ortungsmeldungen generiert werden.

Die Ortungsmeldung für jeden Behälter erfolgt zeitabhängig, d.h. sie wird fortlaufend aktualisiert, so dass ein Benutzer den Transport des Behälters genau verfolgen kann.

Ein Benutzer kann zu beliebigen Zeiten mittels einer Anwendereinheit Ortungsmeldungen von Behältern abrufen und so deren Standort zeitabhängig verfolgen. Die Anwendereinheit ist generell von einer Rechnereinheit gebildet. Beispielsweise kann die Anwendereinheit von einem PC, einem Laptop, einem Smartphone oder dergleichen gebildet sein.

Vorteilhaft ist in der Anwendereinheit eine App vorhanden, über welche der Zugang zum cloudbasierten Rechnersystem ermöglicht wird. Dabei kann durch Zugangscodes vorgegeben werden, ob der Benutzer Zugang zu allen im cloudbasierten Rechnersystem gespeicherten Behältern erhält oder nur einer Teilmenge hiervon.

Gemäß einer vorteilhaften Ausführungsform ist zwischen zwei Datenübertragungsmodulen zweier Behälter eine Datenübertragungsstrecke gebildet, über welche eine bidirektionale Datenübertragung erfolgt, falls jeweils ein Datenübertragungsmodul innerhalb der Reichweite, der von jeweils anderen Datenübertragungsmodulen ausgesendeten Sendesignale ist.

Dabei weist jedes Datenübertragungsmodul einen Sendesignale emittierenden Sender und einen Sendesignale eines weiteren Datenübertragungsmoduls empfangenden Empfänger auf.

In diesem Fall erfolgt die Kommunikation derart, dass das Datenübertragungsmodul eines Master-Behälters an das Datenübertragungsmodul eines Slave- Behälters eine Anfrage sendet. Auf diese Anfrage sendet das Datenübertragungsmodul des Slave-Behälters seine Behälterinformationen an den Master-Behälter.

Sind mehrere Slave-Behälter innerhalb der Reichweite der Datenübertragungsstrecke der Datenübertragungsmodule angeordnet, so erhalten mehrere Slave-Behälter eine Anfrage des Datenübertragungsmoduls des Master-Behälters. Dann können Slave-Behälter, deren Datenübertragungsmodule die Anfrage erhielten, ihre Behälterinformationen an den Master-Behälter senden, wobei die Sendesignale der einzelnen Slave-Behälter im Datenübertragungsmodul des Master-Behälters seriell abgearbeitet werden.

Durch die bidirektionale Dateiübertragung zwischen den Datenübertragungsmodulen kann auch eine Kommunikation zwischen Datenübertragungsmodulen zweier Slave-Behälter erfolgen, d.h. es erfolgt eine Slave-Slave-Kommunikation. Damit können Behälterinformationen eines Slave-Behälters zu einem weiteren Slave-Behälter übertragen werden. Dann kann ein Master-Behälter durch Anfrage an nur einen Slave-Behälter die Behälterinformationen mehrerer Slave-Behälter abrufen.

Gemäß einer vorteilhaften Ausführungsform sind die Sendesignale der Datenübertragungsmodule Bluetooth-Signale.

Derartige Bluetooth-Datenübertragungsstrecken weisen Reichweiten in der Größenordnung einiger Meter, ggf. auch bis etwa 100m (Bluetooth-Klasse1) auf.

Gemäß einer alternativen Ausführungsform sind die Datenübertragungsmodule Bestandteile eines dezentralen Mesh-Netzwerks.

Dabei emittieren die Datenübertragungsmodule Sendesignale in Form von Radiowellen.

In einem derartigen Mesh-Netzwerk gibt es keine Steuereinheit, die die Kommunikation regelt. Vielmehr entscheidet jeder Knoten im Netzwerk, mit wem er kommuniziert. Dabei kann sich jeder Knoten dynamisch mit anderen Knoten verbinden und den besten Kommunikationspfad, insbesondere basierend auf Signalstärke, auswählen. Das Netzwerk ist auf beliebig viele Teilnehmer skalierbar.

Die Reichweiten derartiger Übertragungssysteme liegen bei Radiowellen im GHz-Bereich bis zu 200m.

Gemäß einer vorteilhaften Ausführungsform sind die Behälter Bestandteil eines Entnahmesystems.

Zweckmäßig ist in diesem Fall in jedem Behälter ein an der Behälteröffnung ausmündendes Tauchrohr vorhanden.

Dabei ist das Tauchrohr an seiner Ausmündung an der Behälteröffnung mit einem Tauchrohrverschluss abschließbar. Am nicht abgeschlossenen Tauchrohr ist ein Entnahmekopf als Bestandteil des Entnahmesystems am Tauchrohr anschließbar. Über den Entnahmekopf ist Lagergut aus dem Behälter entnehmbar oder diesem zuführbar.

Vorteilhaft ist das Datenübertragungsmodul eines Behälters im Ausmündungsbereich eines Tauchrohrs oder im Tauchrohrverschluss angeordnet.

Bei Behältern ohne Tauchrohr kann das Datenübertragungsmodul auch in einem Behälterverschluss integriert sein.

Weiter vorteilhaft sind die Ortungseinheit und die Komponenten der Internet-Verbindung eines Master-Behälters im Ausmündungsbereich des Tauchrohrs oder im Tauchrohrverschluss angeordnet.

Die Erfindung wird im Folgenden anhand der Zeichnungen erläutert. Es zeigen:
- Figur 1:: Schematische Darstellung eines Entnahmesystems mit einem zugeordneten Behälter.
- Figur 2:: Schematische Darstellung des erfindungsgemäßen Ortungssystems.
- Figur 3:: Blockschaltbild des erfindungsgemäßen Ortungssystems.

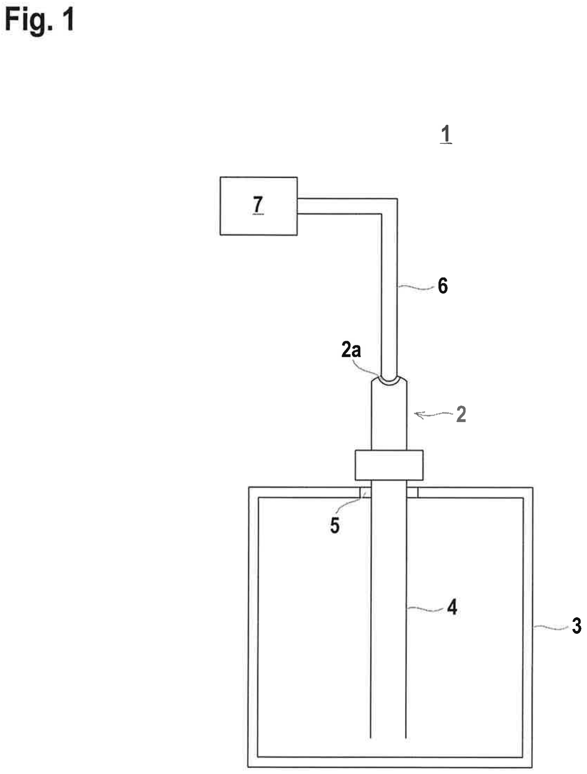

Figur 1 zeigt schematisch ein Entnahmesystem 1. Das Entnahmesystem 1 umfasst einen Entnahmekopf 2, der an einem Behälter 3, der insbesondere fassartig ausgebildet sein kann, angebracht werden kann. In dem Behälter 3 wird eine Flüssigkeit gelagert. Bei in derartigen Behältern 3 gelagerten Flüssigkeiten handelt, es sich insbesondere um flüssige Spezialchemikalien.

Der Behälter 3 weist ein Tauchrohr 4 auf. Das Tauchrohr 4 ist in einem Spundkopf, der in einer Behälteröffnung 5 des Behälters 3 sitzt, gelagert und so fest mit dem Behälter 3 verbunden. Die Längsachse des Tauchrohrs 4 verläuft in vertikaler Richtung.

Der Entnahmekopf 2 dient zur Entnahme von Flüssigkeiten aus dem Behälter 3. Ebenso kann dieser zur Befüllung von Behältern 3 genutzt werden. Hierzu weist der Entnahmekopf 2 an seinem oberen Ende einen Flüssigkeitsanschluss 2a auf. An diesem Flüssigkeitsanschluss 2a wird eine Leitung 6 angeschlossen, die zu einer Pumpe 7 führt. Die Leitung 6 kann in Form eines Schlauchs ausgebildet sein.

Die Pumpe 7 wird von einer nicht dargestellten Steuereinheit gesteuert.

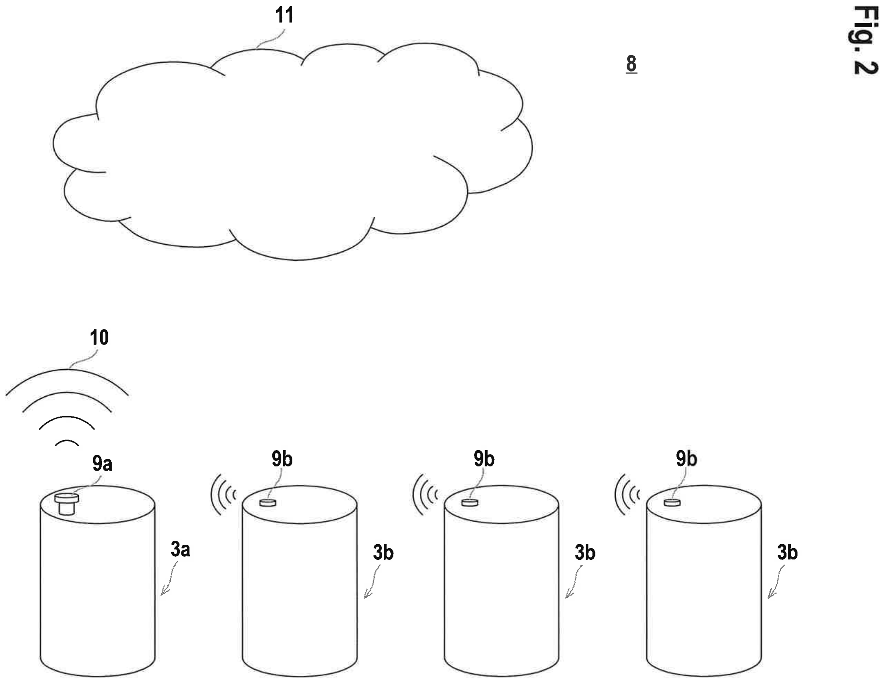

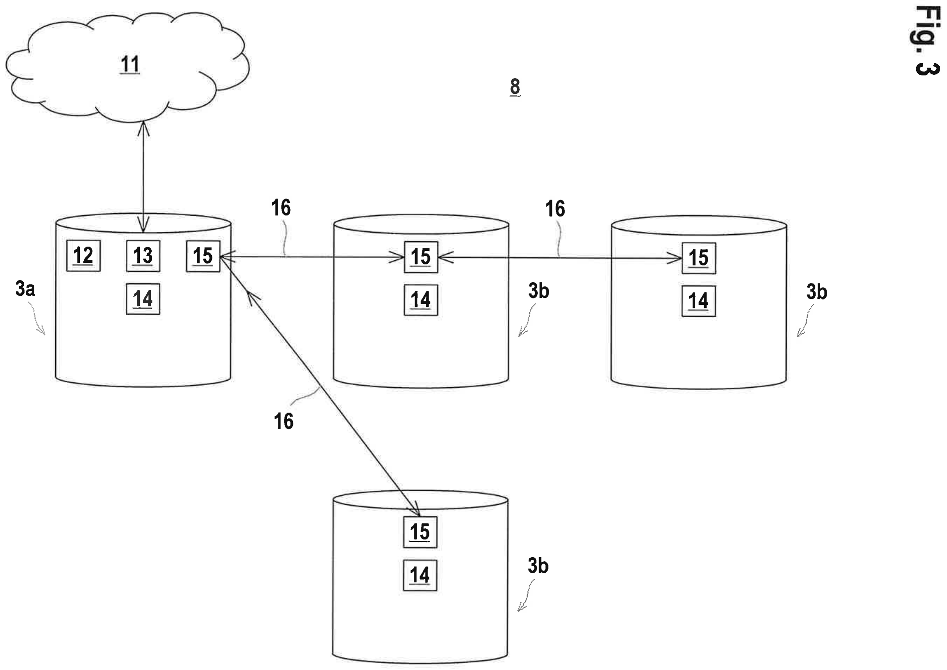

Figur 2 zeigt eine schematische Darstellung des erfindungsgemäßen Ortungssystems 8, Figur 3 zeigt ein Blockschaltbild dieses Ortungssystems 8.

Das Ortungssystem 8 umfasst eine Behälteranordnung, die im vorliegenden Fall vier Behälter 3 aufweist, wobei ein Behälter 3 ein Master-Behälter 3a und drei Behälter 3 Slave-Behälter 3b sind. Diese Anzahl ist keineswegs zwingend. Generell kann das Ortungssystem 8 eine erheblich größere Anzahl von Behältern 3 aufweisen. Dabei können auch mehrere Master-Behälter 3a vorgesehen sein, wobei deren Anzahl jedoch stets erheblich geringer ist als die Anzahl der Slave-Behälter 3b. Im vorliegenden Fall sind alle Master-Behälter 3a identisch ausgebildet. Ebenso sind alle Slave-Behälter 3b identisch ausgebildet. Dies ist jedoch nicht zwingend.

Die Behälter 3 sind im vorliegenden Fall als Fässer ausgebildet.

Generell können die Behälter 3 auch als Kanister, Flaschen, IBC-Behälter oder dergleichen ausgebildet sein.

Die Behälter 3 bilden transportable Einheiten. Zum Transport der Behälter 3 sind deren Behälteröffnungen 5 jeweils mit einem Tauchrohrverschluss 9a, 9b verschlossen.

Die Begriffe "Master" und "Slave" besagen, dass die Master-Behälter 3a gegenüber den Slave-Behältern 3b übergeordnete Einheiten bilden, in dem nur die Master-Behälter 3a über eine Internet-Verbindung 10 mit einem cloudbasierten Rechnersystem 11 kommunizieren können.

Weiterhin ist nur in dem Master-Behälter 3a jeweils eine Ortungseinheit, insbesondere ein GPS-Modul 12, d.h. ein GPS-Tracker vorgesehen (Figur 3), mittels dessen als Ortungsinformationen die Standorte der Master-Behälter 3a bestimmt werden können.

Figur 3 zeigt die Elektronikkomponenten, die in den einzelnen Behältern 3 vorhanden sind. Dabei sind die Elektronikkomponenten im Tauchrohrverschluss 9a, 9b des jeweiligen Behälters 3 und/oder im Ausmündungsbereich des Tauchrohrs 4, in welches der Tauchrohrverschluss 9a, 9b eingeführt ist, angeordnet. Der Master-Behälter 3a weist neben dem GPS-Modul 12 ein Kommunikationsmodul 13 zur Ausbildung der Internet-Verbindung 10 auf.

Insbesondere ist die Internet-Verbindung 10 von einer LTE-Verbindung oder einer WLAN-Verbindung gebildet.

In jedem Behälter 3 ist ein Temperatursensor 14 zur Messung der Innenraumtemperatur des jeweiligen Behälters 3 oder eine dort vorhandene Gasphase vorhanden.

Weiterhin ist in jedem Behälter 3 ein Datenübertragungsmodul 15 mit einem Sendesignale 16 emittierenden Sender und einem Empfänger, der zum Empfang von Sendesignalen 16 eines Datenübertragungsmoduls 15 eines anderen Behälters 3 ausgebildet ist.

Mit dem Datenübertragungsmodul 15 zweier Behälter 3 wird eine Datenübertragungsstrecke begrenzter Reichweite aufgebaut, d.h. die Sendesignale 16, die vom Sender eines Datenübertragungsmodules 15 emittiert werden, können vom Empfänger des anderen Datenübertragungsmoduls 15 empfangen werden, wenn die Datenübertragungsmodule 15 innerhalb der Reichweite angeordnet sind. Dabei erfolgt mit dem Datenübertragungsmodul 15 eine bidirektionale Datenübertragung.

Die Reichweite beträgt typischerweise einige Meter, maximal bis zu 100 m bis 200 m.

Im vorliegenden Fall sind die Sendesignale 16 der Datenübertragungsmodule 15 Bluetooth-Signale.

Alternativ sind die Datenübertragungsmodule 15 Bestandteile eines dezentralen Mesh-Netzwerks.

Dabei emittieren die Datenübertragungsmodule 15 Sendesignale 16 in Form von Radiowellen .

In den Behältern 3, insbesondere in einem dort integrierten Speichermodul oder Prozessmodul sind Behälterinformationen des jeweiligen Behälters 3 abgespeichert.

Hierzu gehört eine Kennung, die den jeweiligen Behälter 3 eindeutig identifiziert.

Weiter bilden Sensorinformationen des Temperatursensors 14 Behälterinformationen.

Optional können die Behälterinformationen den jeweiligen Behälter 3 oder dessen Inhalt kennzeichnende Kenngrößen umfassen.

Erfindungsgemäß wird der Umstand ausgenutzt, dass Behälteranordnungen mit einer großen Anzahl von Behältern 3 zusammen transportiert werden, wobei die Abstände den Behälter 3 klein, insbesondere kleiner als die Reichweiten der Datenübertragungsmodule 15 sind.

Figur 2 zeigt das Funktionsprinzip des erfindungsgemäßen Ortungssystems 8.

In diesem Fall befinden sich alle Slave-Behälter 3b innerhalb der Reichweite der Datenübertragungsmodule 15 zum Master-Behälter 3a.

Der Master-Behälter 3a kommuniziert direkt über die Internet-Verbindung 10 mit dem cloudbasierten Rechnersystem 11 und sendet seine Behälterinformationen zusammen mit den Ortungsinformationen des GPS-Moduls 12, die den Standort des Master-Behälters 3a angeben, an das cloudbasierte Rechnersystem 11.

Im cloudbasierten Rechnersystem 11 werden die Behälterinformationen des Master-Behälters 3a zusammen mit den Ortungsinformationen des Master-Behälters 3a gespeichert und können dann im cloudbasierten Rechnersystem 11 ausgewertet werden.

Da die Slave-Behälter 3b innerhalb der Reichweite zum Master-Behälter 3a angeordnet sind, wird zwischen dem Master-Behälter 3a und jedem Slave-Behälter 3b über deren Datenübertragungsmodul 15 eine Datenübertragungsstrecke aufgebaut.

Der Master-Behälter 3a sendet über die Datenübertragungsstrecke eine Anfrage an den jeweiligen Slave-Behälter 3b, dessen Datenübertragungsmodul 15 als Antwort seine Behälterinformationen an den Master-Behälter 3a sendet.

Der Master-Behälter 3a verknüpft die Behälterinformationen des jeweiligen Slave-Behälters 3b mit den Ortungsinformationen des GPS-Moduls 12 und sendet diese Daten an das cloudbasierte Rechnersystem 11.

Im cloudbasierten Rechnersystem 11 sind die Behälter 3 eindeutig durch deren Kennungen gekennzeichnet. Im cloudbasierten Rechnersystem 11 sind die Behälterinformationen aller Slave-Behälter 3b vorhanden, und zwar verknüpft mit den Ortungsinformationen des Master-Behälters 3a. Da die Datenübertragungsstrecke nur eine begrenzte Reichweite aufweist, geben die Ortungsinformationen des Master-Behälters 3a mit hinreichender Genauigkeit auch den Standort der Slave-Behälter 3b an.

Damit können im cloudbasierten Rechnersystem 11 vorzugweise zeitabhängig nicht nur der Master-Behälter 3a, sondern auch alle Slave-Behälter 3b geortet werden, ohne dass die Slave-Behälter 3b eigene GPS-Module 12 aufweisen müssen.

Im cloudbasierten Rechnersystem 11 liegen die Behälterinformation aller Behälter 3 verknüpft mit den Ortungsinformationen vor und können dort zentral ausgewertet werden. Die Auswerteergebnisse können einen Benutzer, insbesondere über eine lokale Rechnereinheit zur Verfügung gestellt werden.

Mit dem Datenübertragungsmodul 15 kann auch eine Slave-Slave-Kommunikation erfolgen, wie in Figur 3 dargestellt. Damit kann ein Slave-Behälter 3b eine Behälterinformation in einen anderen Slave-Behälter 3b einlesen.

Dies ist vorteilhaft, wenn wie in Figur 3 dargestellt, ein Slave-Behälter 3b weiter entfernt zum Master-Behälter 3a angeordnet ist, so dass dieser nicht direkt mit dem Master-Behälter 3a kommunizieren kann. Auch in diesem Fall können jedoch die Behälterinformationen aller Slave-Behälter 3b dem cloudbasierten Rechnersystem 11 zur Verfügung gestellt werden, da der weiter entfernte Slave-Behälter 3b mit wenigstens einem anderen Slave-Behälter 3b kommuniziert und so seine Behälterinformation an diesen Slave-Behälter 3b weitergeben kann (Figur 3), der dann die Behälterinformation an den Master-Behälter 3a weitergibt.

### Bezugszeichenliste

- (1): Entnahmesystem
- (2): Entnahmekopf
- (2a): Flüssigkeitsanschluss
- (3): Behälter
- (3a): Master-Behälter
- (3b): Slave-Behälter
- (4): Tauchrohr
- (5): Behälteröffnung
- (6): Leitung
- (7): Pumpe
- (8): Ortungssystem
- (9a): Tauchrohrverschluss
- (9b): Tauchrohrverschluss
- (10): Internet-Verbindung
- (11): cloudbasiertes Rechnersystem
- (12): GPS-Modul
- (13): Kommunikationsmodul
- (14): Temperatursensor
- (15): Datenübertragungsmodul
- (16): Sendesignal

## Patentansprüche

1. Ortungssystem (8) für Behälter (3), wobei die Behälter (3) jeweils eine Behälteröffnung (5) zur Zufuhr oder Entnahme von Lagergut aufweisen, **dadurch gekennzeichnet, dass** Slave-Behälter (3b) bildende Behälter (3) und Master-Behälter (3a) bildende Behälter (3) vorhanden sind, wobei nur die Master-Behälter (3a) bildenden Behälter (3) jeweils eine Ortungseinheit, mittels derer als Ortungsinformation der Standort dieses Behälters (3) bestimmt wird, aufweisen, und wobei nur die Master-Behälter (3a) über eine Internet-Verbindung (10) mit einem cloudbasierten Rechnersystem (11) kommunizieren, dass die Behälter (3) jeweils ein Datenübertragungsmodul (15) aufweisen, wobei ein Datenübertragungsmodul (15) eines Slave-Behälters (3b) Sendesignale (16) an ein Datenübertragungsmodul (15) eines Master-Behälters (3a) sendet, falls sich das Datenübertragungsmodul (15) des Master-Behälters (3a) innerhalb einer Reichweite des Sendesignale (16) sendenden Datenübertragungsmoduls (15) des Slave-Behälters (3b) befindet, dass das Datenübertragungsmodul (15) des Slave-Behälters (3b) mit den Sendesignalen (16) Behälterinformationen dieses Slave-Behälters (3b) an das Datenübertragungsmodul (15) des Master-Behälters (3a) sendet, und dass die Behälterinformationen des Slave-Behälters (3b) vom Master-Behälter (3a) mit dessen Ortungsinformation über die Internet-Verbindung (10) an das cloudbasierte Rechnersystem (11) gesendet werden.

2. Ortungssystem (8) nach Anspruch 1, **dadurch gekennzeichnet, dass** die Behälterinformationen eine den jeweiligen Behälter (3) eindeutig kennzeichnende Kennung umfassen.

3. Ortungssystem (8) nach einem der Ansprüche 1 oder 2, **dadurch gekennzeichnet, dass** die Behälterinformationen Sensorinformationen eines Sensors in oder am jeweiligen Behälter (3) umfassen.

4. Ortungssystem (8) nach Anspruch 3, **dadurch gekennzeichnet, dass** der Sensor ein Temperatursensor (14) ist, mittels dessen die Temperatur innerhalb des Behälters (3) erfasst wird, oder dass mit dem Temperatursensor (14) die Temperatur einer im Behälter (3) vorhandenen Gasphase gemessen wird.

5. Ortungssystem (8) nach einem der Ansprüche 1 bis 4, **dadurch gekennzeichnet, dass** die Behälterinformationen den jeweiligen Behälter (3) oder dessen Inhalt kennzeichnende Kenngrößen umfassen.

6. Ortungssystem (8) nach einem der Ansprüche 1 bis 5, **dadurch gekennzeichnet, dass** von einem Master-Behälter (3a) dessen eigene Behälterinformationen sowie alle von Slave-Behältern (3b) eingelesen Behälterinformationen an das cloudbasierte Rechnersystem (11) gesendet werden.

7. Ortungssystem (8) nach einem der Ansprüche 1 bis 6, **dadurch gekennzeichnet, dass** das cloudbasierte Rechnersystem (11) zur Speicherung und Auswertung von Behälterinformationen ausgebildet ist, und/oder dass im cloudbasierten Rechnersystem (11) anhand der Ortungsinformation eine zeitabhängige Ortung der Behälter (3) durchgeführt wird.

8. Ortungssystem (8) nach einem der Ansprüche 1 bis 7, **dadurch gekennzeichnet, dass** die Internet-Verbindung (10) von einer Mobilfunk-Verbindung oder einer WLAN-Verbindung gebildet ist, und/oder dass die Ortungseinheit von einem GPS-Modul (12) gebildet ist.

9. Ortungssystem (8) nach einem der Ansprüche 1 bis 8, **dadurch gekennzeichnet, dass** zwischen zwei Datenübertragungsmodulen (15) zweier Behälter (3) eine Datenübertragungsstrecke gebildet ist, über welche eine bidirektionale Datenübertragung erfolgt, falls ein Datenübertragungsmodul (15) innerhalb der Reichweite der vom anderen Datenübertragungsmodul (15) ausgesendeten Sendesignale (16) ist, wobei jedes Datenübertragungsmodul (15) einen Sendesignale (16) emittierenden Sender und einen Sendesignale eines weiteren Datenübertragungsmoduls (15) empfangenden Empfängers aufweist.

10. Ortungssystem (8) nach einem der Ansprüche 1 bis 9, **dadurch gekennzeichnet, dass** die Sendesignale (16) der Datenübertragungsmodule (15) Bluetooth-Signale sind, oder dass die Datenübertragungsmodule (15) Bestandteile eines dezentralen Mesh-Netzwerks sind.

11. Ortungssystem (8) nach Anspruch 10, **dadurch gekennzeichnet, dass** die Datenübertragungsmodule (15) Sendesignale (16) in Form von Radiowellen emittieren.

12. Ortungssystem (8) nach einem der Ansprüche 1 bis 11, **dadurch gekennzeichnet, dass** die Behälter (3) Bestandteil eines Entnahmesystems (1) sind, wobei in jedem Behälter (3) ein an der Behälteröffnung (5) ausmündendes Tauchrohr (4) vorhanden ist.

13. Ortungssystem (8) nach Anspruch 12, **dadurch gekennzeichnet, dass** das Tauchrohr (4) an seiner Ausmündung an der Behälteröffnung (5) mit einem Tauchrohrverschluss (9a, 9b) abschließbar ist, und dass am nicht abgeschlossenen Tauchrohr (4) ein Entnahmekopf (2) als Bestandteil des Entnahmesystems (1) am Tauchrohr (4) anschließbar ist, wobei über den Entnahmekopf (2) Lagergut aus dem Behälter (3) entnehmbar oder diesem zuführbar ist.

14. Ortungssystem (8) nach Anspruch 13, **dadurch gekennzeichnet, dass** das Datenübertragungsmodul (15) eines Behälters (3) im Ausmündungsbereich eines Tauchrohrs (4) oder im Tauchrohrverschluss (9a, 9b) angeordnet ist, oder dass die Ortungseinheit und die Komponenten der Internet-Verbindung (10) eines Master-Behälters (3a) im Ausmündungsbereich des Tauchrohrs (4) oder im Tauchrohrverschluss (9a, 9b) angeordnet sind.

15. Verfahren zur Ortung von Behältern (3), wobei die Behälter (3) jeweils eine Behälteröffnung (5) zur Zufuhr oder Entnahme von Lagergut aufweisen, **dadurch gekennzeichnet, dass** Slave-Behälter (3b) bildende Behälter (3) und Master-Behälter (3a) bildende Behälter (3) vorhanden sind, wobei nur die Master-Behälter (3a) bildenden Behälter (3) jeweils eine Ortungseinheit, mittels derer als Ortungsinformation den Standort dieses Behälters (3) bestimmt wird, aufweisen, und wobei nur die Master-Behälter (3a) über eine Internet-Verbindung (10) mit einem cloudbasierten Rechnersystem (11) kommunizieren, dass die Behälter (3) jeweils ein Datenübertragungsmodul (15) aufweisen, wobei ein Datenübertragungsmodul (15) eines Slave-Behälters (3b) Sendesignale (16) an ein Datenübertragungsmodul (15) eines Master-Behälters (3a) sendet, falls sich das Datenübertragungsmodul (15) des Master-Behälters (3a) innerhalb einer Reichweite des Sendesignale (16) sendenden Datenübertragungsmoduls (15) des Slave-Behälters (3b) befindet, dass das Datenübertragungsmodul (15) des Slave-Behälters (3b) mit den Sendesignalen (16) Behälterinformationen dieses Slave-Behälters (3b) an das Datenübertragungsmodul (15) des Master-Behälters (3a) sendet, und dass die Behälterinformationen des Slave-Behälters (3b) vom Master-Behälter (3a) mit dessen Ortungsinformation über die Internet-Verbindung (10) an das cloudbasierte Rechnersystem (11) gesendet werden.
